# EUROPEAN PATENT APPLICATION

(11) **EP 0 546 784 A2**
(43) Date of publication of application: **16.06.1993**
(21) Application number: 92311137.1
(22) Date of filing: 07.12.1992
(51) Int. Cl.: G01B 5/00

(54) **Temperature sensor for coordinate positioning apparatus**

(30) Priority: 11.12.1991 GB 9126269
(71) Applicant: Renishaw Metrology Limited, Wotton-Under-Edge, Gloucestershire GL12 8JR (GB)
(72) Inventor: McMurtry, David Roberts, Gloucestershire GL12 7EF (GB)
(74) Representative: Jackson, John Timothy

(57) **Abstract**

A coordinate measuring machine (10,12,14,16) carries a probe head (18), to which may be fitted a probe (20) for measuring a workpiece (24). An infra-red thermal imaging temperature sensor is mounted in or on the probe head (18), to determine the temperature of the workpiece, e.g. so that appropriate compensation may be made to the measurements to allow for thermal expansion. Alternatively, a separately-mounted thermal imaging temperature sensor (50) may be provided for determining the temperature of the workpiece (24).

## Description

This invention relates to coordinate positioning apparatus such as coordinate measuring machines, machine tools, digitising machines and inspection robots. More particularly, it relates to a temperature sensor for such apparatus.

U.S. Patent No. 5,011,297 and German Patent Application No. DE 4039336 disclose a temperature sensor for a coordinate measuring machine, which can be picked up from a storage rack by a movable head of the machine under computer control, and brought into contact with a workpiece, the dimensions of which are to be measured. When in contact, the sensor determines the temperature of the workpiece, and this temperature value can then be used by the computer control to compensate the measured dimensions of the workpiece for thermal expansion. However, to obtain a reliable temperature reading, it is necessary for the sensor to dwell in contact with the surface of the workpiece for a period of time, during which time no measurements can be taken on the workpiece. This causes a significant decrease in the productivity of the measuring machine, particularly if it is desired to check the temperature of several different regions of the workpiece in case there are temperature differentials.

The present invention provides a coordinate positioning apparatus comprising an arm or head which is movable relative to a workpiece and which is adapted to carry a probe for dimensional measurement of the workpiece; and a temperature sensor comprising an infra-red detector for receiving infra-red radiation emitted from the workpiece, thereby to determine the temperature of the workpiece. The temperature sensor may be mounted or mountable in or on the arm or head; or it may be separately mounted elsewhere on the coordinate positioning apparatus. The invention also provides a probe head having such a temperature sensor; and in a further aspect the invention provides a temperature sensor comprising an infra-red detector, adapted for mounting on coordinate positioning apparatus.

Preferably the infra-red detector is in the form of a camera for receiving a two-dimensional image of the workpiece. The head may be of the articulating type, arranged to orientate the probe relative to the workpiece. Where the temperature sensor is mounted in or on such an articulating head, the head can then orientate the sensor in the direction of a desired surface of the workpiece. The temperature sensor may be permanently mounted in the head. Alternatively, it may have the same exchangeable mounting as probes which are to be exchanged by the head, and it may be stored in a storage rack or magazine for such probes when not in use.

Preferred embodiments of the invention will be described with reference to the accompanying drawings, in which:
Fig 1 is a diagrammatic elevation of a coordinate measuring machine,
Fig 2 is an elevation of a probe head for use in the machine, taken in the direction of the arrow II in Fig 1 , and
Fig 3 is a view of a further probe head arrangement, in use on the machine.

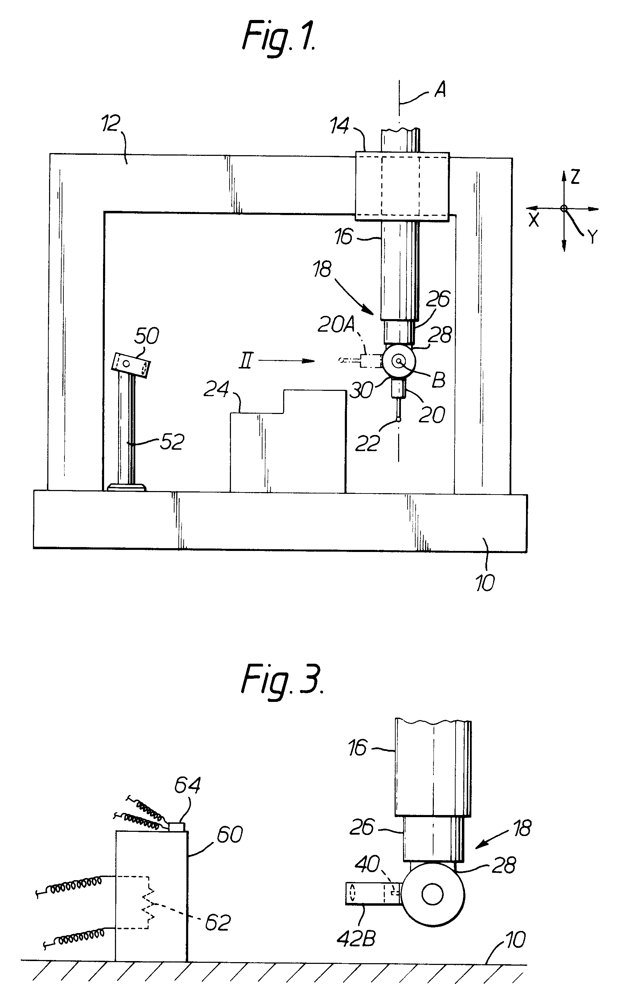

Fig 1 shows a bridge-type coordinate measuring machine. A bridge 12 is movable in the direction of an axis Y (normal to the plane of the paper) on a bed or table 10. A carriage 14 is movable in the direction of an axis X along the bridge 12, and a quill or arm 16 is movable in the vertical Z direction in the carriage 14. As is well known, these movements may be performed by motors, controlled by a computer (not shown). A probe 20 is mounted in a probe head 18 carried by the quill 16, and the probe 20 and probe head 18 can be moved in each of the three dimensions X,Y,Z by the bridge 12, carriage 14 and quill 16. This enables a stylus 22 of the probe 20 to contact various surfaces of a workpiece 24 placed on the bed 10, to enable measurements to be made. The probe 20 could be a touch trigger probe, or an analogue (proportional) probe, or could be replaced with any other type of probe, e.g. an optical scanning probe.

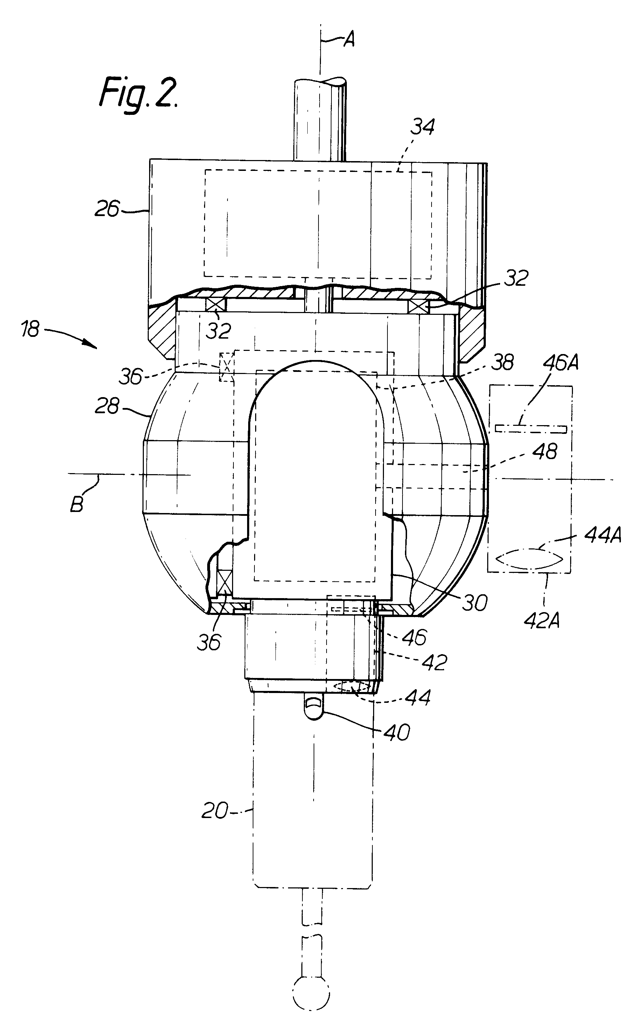

Referring to both Figs 1 and 2, the probe head 18 is preferably of the articulating type, for orientating the probe 20 in any desired direction, e.g. as indicated at 20A in Fig 1. It may for example be a motorised probe head similar to those sold by the present applicants Renishaw under the designations PH9A or PH10M, and can also be controlled by the computer. The probe head comprises a fixed part 26 which can be secured in the quill 16. A first rotor 28 is mounted on bearings 32 in the fixed part 26, so as to be rotatable about an axis A by means of a motor 34. A second rotor 30 is located on bearings 36 within the first rotor 28, so as to be rotatable about an axis B by means of a motor 38. The bearings 32,36 and the motors 34,38 may enable continuous smooth rotation of the rotors 28,30, or alternatively they may provide for indexing of the rotors in a stepped manner, as in the applicants' PH9A and PH10M probe heads or as in Figs 4 to 7 of U.S. Patent 4,168,576.

The probe 20 is attached to the rotor 30 by means of an automatic coupling joint of the type described in U.S. Patent 4,651,405. As described in that patent, this permits the probe 20 to be picked up and put down automatically by the head 18 in a storage rack (not shown here) provided on the bed 10 of the machine. In this way, the probe 20 can be exchanged for other, different probes, or for probes having a different configuration. In Fig 2, there can be seen a coupling element or pin 40, which is further described in U.S. Patent 4,651,405, extending from the rotor 30. This forms part of the automatic coupling joint.

In a first embodiment of the invention, an infra-red temperature sensor 42 is provided within the rotor 30. The sensor comprises a sensing element 46 and a lens 44 for focusing infra-red radiation onto the sensing element 46. In use, with the probe 20 removed and set down in the storage rack, the probe head is moved and its rotors are oriented so as to point the temperature sensor 42 at the workpiece 24. The sensing element 46 now detects the temperature of the workpiece from the incoming infra-red radiation, and provides a temperature value to the computer. The computer uses the temperature value to look up a correction factor (for the particular material of which the workpiece is made) for use in compensating the dimensional measurements made by the machine on that workpiece. Alternatively, the computer may simply give an error signal if the temperature lies outside certain predetermined limits.

The temperature sensor 42 may be of the type which gives just one temperature reading, either of a point on the workpiece surface (if in focus), or an average reading over an area of the workpiece surface (if not in focus). Preferably, however, the sensor 42 is a thermal imaging sensor, the sensing element 46 comprising a two-dimensional array of pixels. In use, the probe head 18 is manoeuvred to a position such that a two-dimensional image of the workpiece surface is formed on the sensing element 46, and the data resulting from this two-dimensional image is fed back to the computer for analysis. This may show that some parts of the workpiece surface are at different temperatures from other parts. The computer may, for example, be programmed to determine the respective temperatures of different features of the workpiece, and to apply appropriate different compensating factors to measurements taken from each of those features.

Following the temperature determination just described, the probe head may then pick up an appropriate probe or probes from the storage rack and measure the workpiece in the normal manner.

Instead of being located within the rotor 30, the temperature sensor 42 may be located elsewhere. One example is to locate it on the side of the rotor 28, as shown by broken lines at 42A in Fig 2. The sensor 42A has a lens 44A and a sensing element 46A, as previously, and is connected to rotate with the rotor 30 by means of a shaft 48. This has the advantage that larger sensors may be accommodated, and it may not be necessary to remove the probe 20 before taking any temperature measurements. Another possibility, illustrated in Fig 3, is to provide a temperature sensor 42B with the necessary coupling elements for co-operation with the coupling element 40, in the same manner as the probe 20. The temperature sensor 42B can then be stored in the storage rack and picked up in exchange for the probe 20 when required. Such an arrangement is described (with a different type of temperature sensor) in the above-mentioned U.S. Patent 5,011,297.

The present invention is not restricted to the described articulating-type probe heads. The temperature sensor 42,42A or 42B may be fitted on or in a manually indexable probe head on a manually-operable machine, or to a fixed non-articulating probe head. It could even be mounted directly to the quill or arm 16. However, such arrangements are obviously less flexible than the preferred arrangement described above.

In a second embodiment of the invention, instead of the sensor 42 in the head 18, a temperature sensor 50 is mounted on the bed 10 of the machine, e.g. on a post or stand 52. A universal swivel joint may be provided between the post 52 and the sensor 50, to enable the sensor to be orientated (manually, or even under computer control) towards the workpiece. Alternatively or additionally, the height of the post 52 may be adjustable, and/or its location on the bed of the machine may be changeable, to permit such orientation. The sensor 50, like the sensor 42, may be of the type which gives just one temperature reading, or it may provide a two-dimensional image of the workpiece surface. It may even be mounted so as to give a thermal image of the whole working volume of the machine, the computer being programmed to use only that part of the thermal image which results from the workpiece.

Fig 3 also illustrates a calibration block 60, which may be provided at a convenient location on the table 10 of the CMM. It can then be used with any of the temperature sensors 42,42A,42B, mounted in or on the probe head 18. The probe head is manoeuvred so that the calibration block 60 lies within the field of view of the temperature sensor. Alternatively, the calibration block 60 may be used with a temperature sensor 50 mounted on the bed 10 of the machine, provided it is placed within the field of view on the sensor.

The calibration block 60 may be maintained at a predetermined reference temperature. To this end, it may contain a heating element 62, and may have a permanently fixed temperature sensor such as a thermocouple 64 for detecting the temperature of the block and feeding back a signal to maintain the temperature thermostatically. Another possibility is to control thermostatically the temperature of just a small target region of the block 60. The predetermined temperature at which the block or target 60 is maintained may be 20°C, or a higher temperature if more convenient for thermostatic control. Alternatively, the heating element 62 may be replaced by a cooling element, the block or target 60 being maintained thermostatically at a lower temperature such as 0°C. In use, the infra-red temperature sensor 42,42A,42B,50 is used to take a temperature reading of the block or target, which then gives a reference temperature for other readings taken upon the workpiece 24 with the temperature sensor.

Alternatively, the heating element 62 may be omitted from the block 60, and its temperature may be allowed to fluctuate with ambient conditions. In this case, the temperature sensor 64 is connected to the computer control of the machine. The computer compares its output with the output of the sensor 42,50 when directed at the block 60, giving a temperature measurement to which other measurements with the sensor 42,50 may be referenced.

Any suitable type of infra-red thermal sensor may be used for the temperature sensors 42,42A,42B and 50. A solid state imaging type, available from GEC Marconi Materials Technology, Caswell, United Kingdom, is described in an article by Adrian MacLeod, New Electronics, October 1991, pages 19-20, and uses an array of 100 × 100 pyroelectric ceramic elements for the sensing element 46, forming part of a hybrid integrated circuit. Other possible sensors include photoconductive sensors and photovoltaic sensors. Companies selling infra-red thermal sensors include Laser Monitoring Systems Limited, Newlands Science Park, Inglemire Lane, Hull, HU6 7TQ, United Kingdom; Eurisem Technics, 40 High Street, Earl Shilton, Leicestershire, LE9 7DG, United Kingdom; Terra Universal Inc., 700 N. Harbor Blvd, Anaheim, CA 92805-2589, U.S.A.; and Rank Taylor Hobson Limited, P.O. Box 36, New Star Road, Leicester, LE4 7JQ, United Kingdom.

Apart from the coordinate measuring machine described above, the invention may also be used in other apparatus with which dimensional measurements of workpieces are taken, such as other types of coordinate measuring machine, machine tools, digitising machines and inspection robots.

## Claims

1. Coordinate positioning apparatus comprising an arm or head (16,18) which is movable relative to a workpiece (24) and which is adapted to carry a probe (20) for dimensional measurement of the workpiece; and a temperature sensor for determining the temperature of the workpiece; characterised in that the temperature sensor comprises an infra-red detector (42,42A,42B,50) for receiving infra-red radiation emitted from the workpiece.

2. Apparatus according to claim 1 wherein the temperature sensor (42,42A,42B) is mounted or mountable in or on the arm or head (16,18).

3. Apparatus according to claim 2, wherein the temperature sensor (42B) is exchangeable with a said probe (20).

4. Apparatus according to claim 2 or claim 3, wherein the temperature sensor (42,42A,42B) is mounted or mountable in or on an articulating head (18) capable of orientating the temperature sensor in the direction of a desired surface of the workpiece (24).

5. Apparatus according to claim 1 wherein the temperature sensor (50) is mounted on the apparatus separately from the arm or head (16,18).

6. Apparatus according to any one of the preceding claims, wherein the infra-red detector (42,42A,42B,50) is a thermal imaging sensor for receiving a two-dimensional image of the workpiece.

7. Apparatus according to any one of the preceding claims, including a calibration block or target (60) from which the temperature sensor (42,42A,42B,50) can obtain a reference temperature reading.

8. Apparatus according to claim 7, in which the temperature of the calibration block or target (60) is thermostatically controllable.

9. Apparatus according to claim 7, including a further temperature sensor (64) for determining the temperature of the calibration block or target (60).

10. A probe head (18) for coordinate positioning apparatus, which is adapted to carry a probe (20) for dimensional measurement of a workpiece (24); and a temperature sensor mounted or mountable in or on the probe head for determining the temperature of the workpiece; characterised in that the temperature sensor comprises an infra-red detector (42,42A,42B,50) for receiving infra-red radiation emitted from the workpiece.
